# EUROPEAN PATENT APPLICATION

(11) **EP 4 187 380 A1**
(43) Date of publication of application: **31.05.2023**
(21) Application number: 22174717.3
(22) Date of filing: 20.05.2022
(51) Int. Cl.: G06F 9/455

(54) **TRANSLATING INTERMEDIATE CODE TO PROVIDE MACHINE CODE BY SELECTING SUITABLE TRANSLATION OPTIONS**

(30) Priority: 30.11.2021 EP 21211486; 06.04.2022 EP 22166918
(71) Applicant: aicas GmbH, 76131 Karlsruhe (DE)
(72) Inventor: HUNT, James J., 76297 Stutensee (DE); TONIN, Isabel, 76297 Stutensee (DE)
(74) Representative: Zahn, Matthias

(57) **Abstract**

A computer (100) accesses its storage (110) to read application software (302) with modules (111-B) in intermediate code. The computer (100) receives a trigger to execute a particular module (111-B) and selectively translates the intermediate code to machine code by an interpreter (131) installed on the computer (100), translates the intermediate code to machine code by a just-in-time compiler 132(2) that is installed on the computer (100), or loads precompiled machine code (111-M) to memory from storage (110).

The computer (100) uses selection criteria such as the expected execution duration for the particular module (111-B) (comprising the time to translate the intermediate code to machine code), the number of expected executions of the particular module (111-B), the memory consumption by the translation, and the availability of precompiled machine code (111-M). The computer (100) can interact with a further computer (200) to send (521) a request for machine code (351) to the further computer (200), the request specifying the intermediate code for that machine code has to be provided, and alternatively, receives the machine code in a response (352), or receives a response that machine code is not available.

## Description

### Technical Field

The disclosure generally relates to computer programming languages, and more particularly, relates to computer systems, methods, and computer-program products for providing machine code for computer processors.

### Background

Looking from a high-level perspective, computer software can be differentiated into system software (such as the operating system, firmware, etc.) and application software. In view of the function of a computer, these terms are conceptually different: two computers may each execute substantially the same system software that provides basic general functionality but that is agnostic to the ultimate functionality of a particular system. But both computers may execute different application software to support different behavior.

In a first example, a (first) computer has been embedded into a humanoid robot. The system software lets the computer handle basic functions (such as to transfer code from storage to memory). The application software supports application functions, for example two functions: (i) the computer generates control signals for the legs and arms of the robot to keep the robot's balance while walking, and (ii) the computer decides when the robot must go to a battery charger.

In a second example, a (second) computer executes software to control an air-conditioning (AC) device. Again, the system software takes care for basic functions, and the application software implements a control loop function to process signals from thermometers and other sensors and to generate control signals to heaters or coolers.

Software is usually implemented in modules that comprise coded instructions (or "code") to the processor of the computer. Software is deployed to the computers at different points in time. In the examples, both the first and the second computer may have received the system software shortly after manufacturing, but receive the application software when being connected to the host equipment, e.g., installing the computer to the robot, connecting the computer to the AC device, etc.

Both the system software and the application software usually comprise sets of software modules. In view of the above-mentioned functional differentiation, there can be system modules and application modules. Modules interact with each other: system modules interact with system modules, system modules interact with application modules, and application modules interact with application modules. There are many examples, one specialized module (or "library", or "routine") can comprise instructions that are accessible to other modules through an application program interface (API). There are modules to support functions such as for device drivers, or user interfaces. As mentioned above, there is a functional specialization from system modules to application modules. The computer can execute multiple modules substantially simultaneously, but not necessarily all modules at the same time. (There are reasons for that, such as memory limitations, energy consumption aspects, etc.)

System modules and application modules may change from time to time. However, the application modules see more changes than the system modules. There are several reasons for that, among them the following:
- The application modules may need to be adapted to functional changes. In the robot example, the code would help the robot to move faster or to move more accurately, to charge the battery more efficiently, and so on. In the AC example, the code would be updated when a sensor is being replaced, or when a desired temperature-response pattern changes.
- Functional definitions may not yet be available when the computer is manufactured (and when the system modules are being deployed). There is a requirement to develop and to deploy application modules to computers that are already in operation (with system and application modules).

Looking at the overall process from developing code to deploying code, the form of the code changes. Humans understand source code, machines understand machine code. Intermediate languages are common, and most of the intermediate code is independent from the machine. Code translations (from source code, optionally to intermediate code, and further to machine code) imply different code levels - high to low - with the level decreasing when the code goes nearer to the machine.

To be responsive to changes, the computer that executes the system software and the application software (as the computers in the above examples) can also execute one or more code translation modules, such as compilers, interpreters and others. It does not matter if the code translation modules are considered to be system modules or application modules. In any case, the use of code translation modules ("on-board the computer") has technical constraints, such as explained in the following.

The computer executes the code translation modules in its memory, but the share of the memory occupied by code translation modules is not available for system modules and for application modules. The constraint gets more severe for computers with limited physical dimensions and consequently with performance restrictions (e.g., the computer embedded into the robot).

The computer may translate the code for each instruction, as it is encountered, thus multiple times for the same source (or intermediate code). Such redundant resource consumption is potentially not desired, for example, because each instruction runs more slowly, and each code translation requires energy, for example, energy that comes from the battery of the robot.

As code translation (to machine code) precedes code execution (the computer executing machine code), code translation time is waiting time. Time-critical modules may show a delay that needs to be avoided. In the robot example, updated code may not be available in machine-readable form in due time, so that the robot may eventually fall over.

As code translation follows predefined rules, the code translation module can provide machine code that lets the computer perform a particular function. The translation process includes optimizations of varying effectiveness and "costs", i.e., the consumptions of computing resources, energy, etc. Initial translation may only use translations that are most effective in terms of computation time of the translation, but the translation may be repeated for code that is used very frequently. Such an approach may take advantage of more complex optimization that takes longer but results in better execution performance of the resultant code. Profiling is an approach that is used to decide which code is to be pretranslated and what optimization applies for optimal speed, memory consumption, etc. However, repeating requires "on-board" resources.

Code translation modules consume memory (when the modules are being executed) and the memory consumption may be - at least temporarily - relatively large so that the execution of other modules may be delayed or otherwise negatively influenced.

Having code in different forms may lead to further constraints, among them the following: (i) source code and intermediate code may be of interest for attackers (who seek to understand the function, to modify the function of the computer, etc.); or (ii) source code and intermediate code may be proprietary to their developers so that it may be required to prevent disclosure to the operators of the equipment e.g., the robot, or the AC.

### Summary

A computer executes a computer-implemented method. The computer accesses its storage to read application software with modules in intermediate code. The computer receives a trigger to execute a particular module and selectively translates the intermediate code to machine instructions by an interpreter installed on the computer, translates the intermediate code to machine code by a just-in-time compiler (that is installed on the computer), or loads precompiled machine code to memory from storage. The computer uses selection criteria such as the expected execution duration for the particular module (comprising the time to translate the intermediate code to machine code), the number of expected executions of the particular module, the memory consumption by the translation, and the availability of precompiled machine code.

Optionally, the computer can interact with a further computer to send a request for machine code to the further computer, the request specifying the intermediate code for that machine code has to be provided, and alternatively, receives the intermediate code in a response, or receives a response that intermediate code is not available.

More in detail, the computer is a first computer - the "application computer" - and performs one or more functions that are defined by the modules of the application software. The application computer comprises runtime environment software (RTE) that enables the application computer to load software modules that have the instructions in the form of source code or intermediate code. The RTE enables the computer to execute the instructions, by translating or compiling the modules. The RTE select the most appropriate translation to machine code on a case-by-case base (based on predefined rules).

Further, the RTE can - at least partly - be supported by a second computer - the "auxiliary computer" - that maintains a collection of machine code that was compiled in advance (precompiled machine code). The auxiliary computer can be implemented as an external computer that is communicatively coupled to the application computer.

The RTE software communicates environment data of the application computer to the auxiliary computer. Upon receiving a trigger to execute a particular module, the RTE software queries the auxiliary computer for a version of that particular module in precompiled machine code, that fits to the environments of the application computer.

Implementations are available for Java, with the runtime environment software (RTE) being a Java Virtual Machine (JVM) and with the intermediate code being byte code.

### Brief Description of the Drawings

FIG. 1 illustrates a diagram with two computers wherein the computer on the left side performs a particular application, and the computer on the right side is an auxiliary computer that supports the provision of machine code to the application computer;
FIG. 2 illustrates multiple application computers, as well as the auxiliary computer;
FIG. 3 illustrates execution duration intervals to conveniently show approaches to select code provision options, and to - optionally - distribute code generation;
FIG. 4 again illustrates block diagrams of the computers;
FIG. 5 illustrates flowchart diagrams of methods to operate the computers; and
FIG. 6 illustrates a diagram with an example of a generic computer device and a generic mobile computer device, which may be used with the techniques described herein.

### Detailed Description

### Writing convention

The description occasionally refers to file name extensions (such as ".java"), but particular extensions are examples only. The skilled person may configure computers in environments in that file names have different extensions, or do not have extensions at all. The term "processor" collectively stands for a central processing unit (CPU) and for a graphics processing unit (GPU) of a computer. The use of a GPU is optional.

The description also refers to implementations that use the computer programming language Java. Java specific terms refer to specific examples for concepts in general, such as "byte code" being an example for "intermediate code", JVM being the example for the RTE and so on.

Machine code results from translation (for example by a compiler). The description uses the phrase "predefined machine code" in connection with an action in the sense the compilation has been completed before the action is performed. For example, the phrase "load precompiled machine code" stands for loading machine code that has been obtained (by compiling) ahead of loading.

### Terminology of the computers

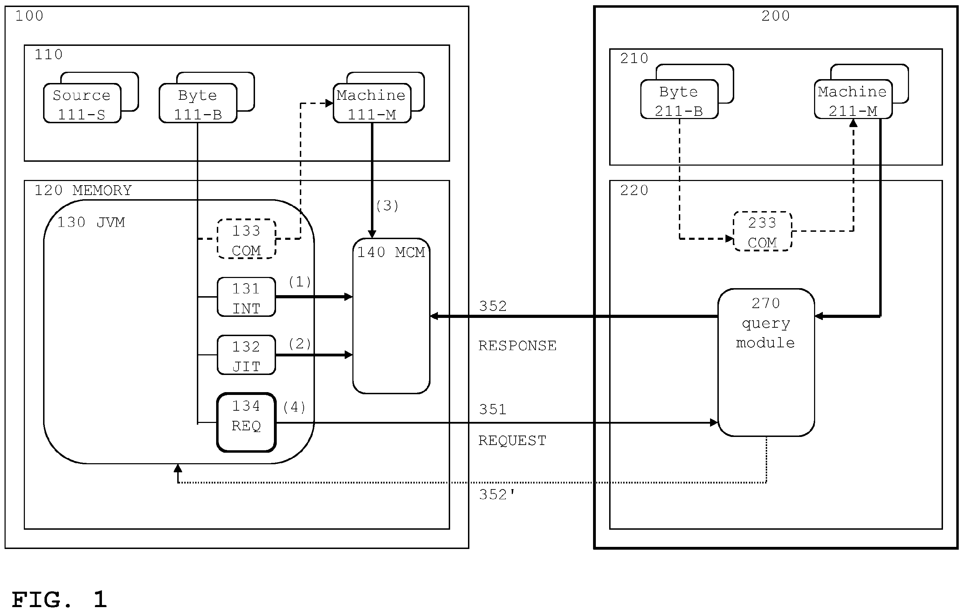

FIG. 1 illustrates a diagram with two computers 100 and 200. As it will be explained, code translation modules 131, 132, 133, and 233 are distributed to different physical computers 100 and 200. In other words, code translation functionality at computer 100 (with modules 131, 132, 133) can be enhanced by providing alternative code translation functionality on other computers, illustrated here as computer 200 with module 233. The description focuses on that alternative by occasionally using the attributes "on-board" (translation in computer 100) and "off-board" (in 200).

The figure illustrates code translation modules by ahead-of-time (AoT, "COM") compiler 133, interpreter 131, and just-in-time (JIT) compiler 132 in computer 100, and by ahead-of-time compiler 233 in computer 200. Compiler 233 can take over some activities from modules 133/131/132.

In relation to computer 100, the further classification into "on-board" and "off-board" is convenient: compilers 132 and 133 are on-board compilers, and compiler 233 is an off-board compiler.

Compiler 233 has a corresponding counter-part in computer 100, here called requester 134. In computer 100, requester 134 appears like a compiler, but requester 134 is more a logistical module (i.e., a communication module) that transmits a request for machine code 351 and that receives a response 352 (with machine code).

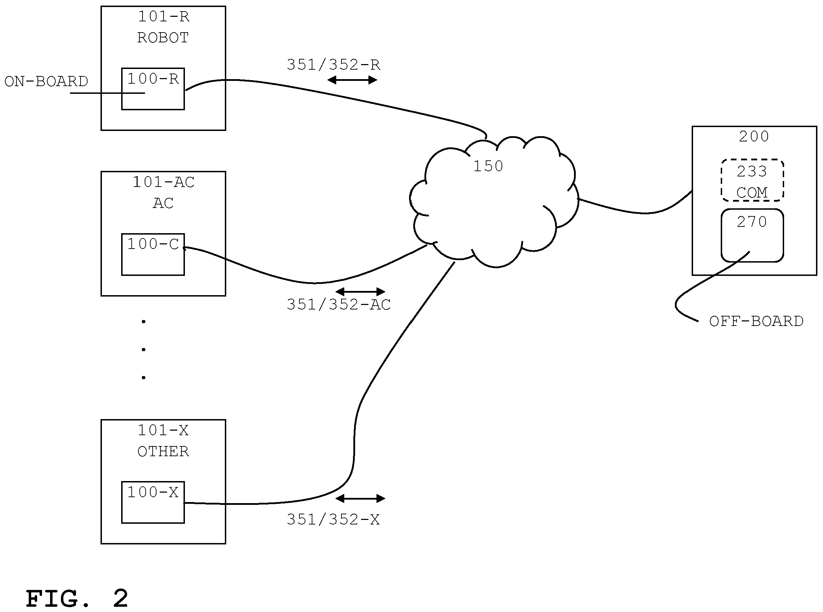

Computers 100 and 200 have standard hardware components such as one or more processors (not illustrated here), storage (permanent storage, usually implemented by hard drives, solid-state drives SSD or the like), illustrated here as storage 110/210, memory (volatile memory, usually random access memory RAM), illustrated here as main memory 120/220, communication components (such as network adapters, buses, interfaces to exchange data etc., not illustrated here but symbolized by a network in FIG. 2).

Computers 100 and 200 have standardized software modules, such as operating systems or the like, and optionally may have virtualization software. Standardized software usually belongs to the system software. Computers store software code in storage 110/210 (and move it to and from memory 120/220). The skilled person is familiar with many storage approaches, such as storing code in files, e.g., separate for each module, or combined for some modules, databases, or the like. To differentiate between different code formats or other characteristics, the description uses the convention of file extensions.

The description further differentiates between application computer 100 that performs a particular function according to application software (for example, to control the robot or to control the AC), and auxiliary computer 200 that supports application computer 100 by having code translation functionality.

The figure is symbolic and illustrates MCM 140 as the part of memory 120 that keeps machine code instructions when they to be are executed by the processor ("machine code memory"). Bold directed arrows (1), (2), (3) and (4) illustrate several options how the machine code reaches the memory. Physically there is no difference between MCM 140 and the rest of memory 120, and MCM 140 does not even have to be contiguous (in memory 120).

FIG. 2 illustrates multiple application computers 100-R, 100-AC, 100-X (collectively 100) as well as auxiliary computer 200, again at the left and right sides of the figure, in simplified use case scenarios.

As already mentioned, from the view point of application computer 100, hardware components and software modules can be "on-board" (when implemented by application computer 100), or can be "off-board" (when implemented by auxiliary computer 200). Off-board modules in auxiliary computer 200 can be accessed by multiple computers 100 (cf. request 351 / response 352, separate for R, AC and X).

As the physical location of auxiliary computer 200 can be different from that of application computer 100, auxiliary computer 200 can be implemented by a server computer (that is located at a location remote to that of computer 100). As symbolized by network 150, both computers 100 and 200 are communicatively coupled, at least temporarily (such as when a request and a response are being communicated). They can communicate via internet protocols, or otherwise. Such arrangements are colloquially called "cloud computing", with computer 200 located in the "cloud".

In many use-cases, the application, e.g., to control the robot, to control the AC device, is related to technical equipment 101, (e.g., robot 101-R, AC device 101-AC, or other device 101-X). It is therefore convenient to consider application computer 100 as the "equipment computer" or as the "device computer".

### Java

The description now returns to FIG. 1, and refers to application computer 100 using code in the well-known example of the computer programming language Java. Using Java code in application software (with application modules) is well known in the art.

It should be noted that the principles of distributing functionality are not limited to application software, but applicable to system software as well (or to software in other granularities). In case of Java, the following conventions apply, by way of example. (i) Human-understandable source code is code written in Java, and the computer can store source code modules in files that have extensions such as ".java". Source code is machine independent. (ii) Intermediate code is called "byte code", and the computer can store byte code modules in files with extensions, such as ".class". The files are sometimes called "class files". Byte code is machine independent as well. In some scenarios, intermediate code can have two (or more) forms. Byte code can be further translated to a further intermediate code (such as to code in the language C, high-level assemble code). (iii) Machine code, i.e., code ready to be executed, in MCM 140, is stored in files with extensions such as ".exe", ".dll", ".a", ".so", or in files without extension. Machine code is specific to a particular environment of the application computer (among them hardware, system software). In other words, machine code is dependent on the environment and would be different for different environments. Code for one environment would usually not be suitable for other environments.

The skilled person can deviate from these conventions, especially when using different programming languages, but the difference between source code (S), intermediate (byte) code (B) and machine code (M) remains applicable.

The skilled person is familiar with Java-typical terminology. For example, routines are associated with classes are usually called "methods", in other languages, the terminology may be different.

FIG. 1 illustrates code that is stored in storage files: source code 111-S, byte code 111-B and machine code 111-M. There are multiple files per category, such as code in multiple modules, but the figure is simplified.

While it is possible to store one module per file, the skilled person usually applies modules in combinations that are conveniently adapted to the various deployment stages and to various deployment granularities. For example, the application modules of a first application may be deployed to the computer in a single file, such as a collection of modules in (Java) byte code stored in a single file with the extension ".jar". (The skilled person is familiar with that concept. Jar files are archives, similar to zip-files). In the robot example, the computer would receive a "move application" with a set of modules to enable the robot to move (or even to walk), and the computer would receive a "charge application" with a set of modules to enable charging.

Computer 100 could also receive a single application as a combination of the move application and of the charge application.

### JVM

To stay with the Java example, code translation modules belong to the software that is executed by application computer 100. Modules 133/131/132 are therefore illustrated within memory 120. Modules 133/131/132 do not have to be permanently present in memory 120, they are usually stored in storage 110 to be loaded to memory 120 when needed. Conceptually it does not matter if the code translation modules are considered to be system software or to be application software.

Some code translation modules - but not necessarily all - can be implemented in a so-called Java Virtual Machine (JVM), here illustrated as JVM 130 (already loaded to memory 120 for execution). Simplified, a JVM is the runtime environment (RTE) for modules in Java.

Typically, the JVM comprises code translation modules that are interpreters or compilers (such as interpreter 131 and compiler 133), and further comprises auxiliary blocks to handle software (such as a so-called class loader to load modules in byte code to memory). To keep the illustration focused, the auxiliary blocks are omitted from the figure.

JVM 130 can also comprise auxiliary blocks to coordinate the interaction between system modules and/or application modules. For example, the JVM can receive (or generate) a trigger to start the execution of a particular module. In the robot example, JVM 130 could receive a sensor signal to trigger the left leg to move, receive a sensor signal to trigger the right leg to move, and so on. In the AC example, JVM 130 could receive a user-interaction command to adjust the temperature.

The auxiliary blocks can further comprise so-called garbage collectors (to manage memory). Such auxiliary blocks are known in the art.

Looking at auxiliary computer 200, it does not have to comprise a JVM, but it comprises compiler 233 (to converts byte code to machine code) and query module 270 (a logistics module).

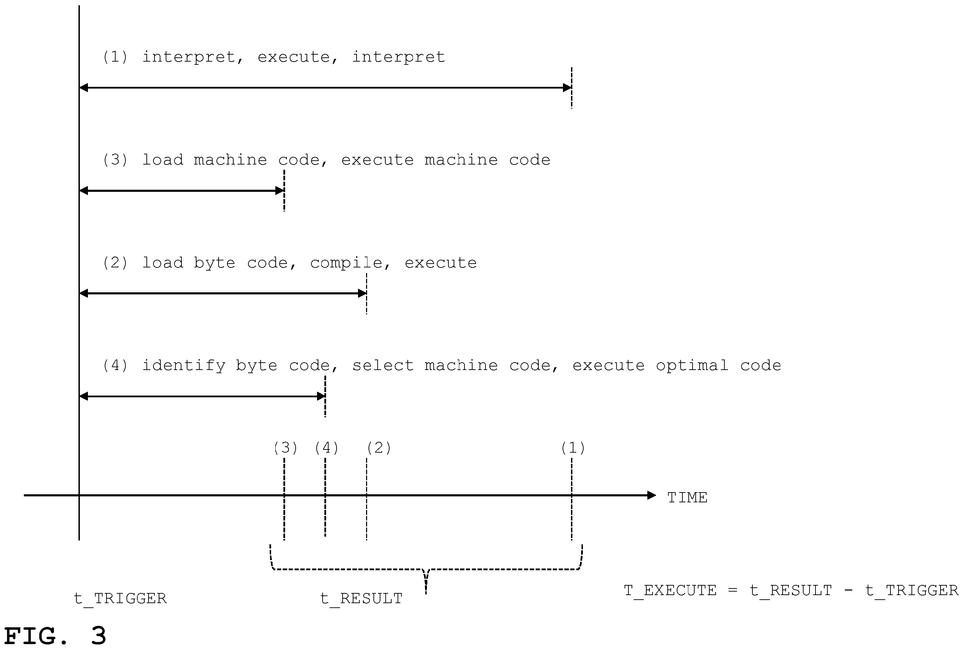

FIG. 3 illustrates execution duration T_EXECUTE to conveniently show the approach to distribute the generation of machine code. As used herein, the execution duration of a particular module is the time interval from receiving the trigger (at time point t_TRIGGER) to obtain a functional result from the execution (at time point t_RESULT). In the robot example, the execution duration can be the interval from the trigger (to move a leg) to obtain the signal (that controls the leg), or it can be the interval from receiving a warning (battery charge is low or the like) to establishing the contact to the charger.

The execution duration may be critical in the robot example. Simplified, there is a risk that the robot falls over because its computer is busy and may not provide the control signal to the legs in time. But the execution duration may be uncritical in the AC example because control loop time constants of heaters or coolers are relatively long.

FIG. 3 illustrates t_RESULT (and hence T_EXECUTE = t_RESULT - t_TRIGGER) for four machine code provision options (1) to (4), with main activities, such as to "interpret, execute, interpret ..." in option (1), "load machine code, execute machine code" in option (2), "load byte code, compile, execute" in option (3), and "identify byte code, select machine code, execute optimal code" in option (4). Option (4) will be explained below in connection with an approach to shift compilation (to another location).

There are differences between interpreters and compilers, in view of their operation principles: (i) Interpreter 131 is adapted to read a module in byte code (previously loaded from storage 110 to memory 120) and to direct the processor to execute the code steps accordingly. Interpreter 131 can start to operate upon receiving the trigger to a particular module. But the execution duration includes the operation time of the interpreter. Simplified, the interpreter may be suitable in the AC example. (ii) Compiler 133 is adapted to compile byte code to machine code and to store the machine code in storage (dashed lines in FIG. 1), usually as a so-called executable (extensions ".exe or ".dll", or Executable and Linkable Format ELF without extensions or with the extension ".so"). This compilation does not require any trigger and can be performed at any time before execution. When the trigger arrives, the JVM (or a module of the operating system) loads the machine code to the memory so that the processor starts to execute the machine code. Some compilers can optimize the machine code to shorten the execution duration, to minimize resource consumption and so on. Simplified, the compiler may be suitable in the robot example. Potentially, the code is optimized.

The skilled person is familiar with other types of compilers, such as to convert source code to byte code. For Java, an example for such compilers is the so-called "javac compiler".

Differences between interpreters and compilers are also applicable not only in view of the execution duration, but also in view of other criteria such as storage / memory requirements. Much simplified, and depending on the circumstances, compiling may have preference over interpreting due to execution speed, and interpreting may have preference over compiling due to storage and memory requirements (the preferences can be implemented by predefined rules or the like).

JVM 130 usually is adapted to that. Since the applications, e.g., to move the robot, or to charge it, are performed by multiple application modules that interact with each other, JVM 130 can perform further activities such as to keep a list of the modules to be loaded (in byte code to the interpreter or compiler, etc.). The list also keeps references to classes and to methods (in class definition graphs or otherwise).

Combining machine code from different modules to a single executable (".o" or ".a") is known in the art (by linking etc.).

However, not all modules need to be present in memory all of the time. Applications are loaded to memory, and are removed from memory. For example, the robot computer may disregard the modules for the move application when it charges the battery. Even within applications, some modules may not be required to be loaded to memory.

Compiler 133 stores the executables that remain in storage 110 (cf. dashed line from 133 to 111-M). When the compiler has completed the compilation (of one or more modules), it can be removed from memory. But the computer is static in the sense that new code (such as byte code loaded to memory) is not yet compiled, the compiler would have to be started again (and would occupy memory). The compiler is also static in the sense that the result of compilation (i.e., the executable) has to be stored, and that some of the executables may not be called at all.

This aspect is of concern if the compiler has compiled all of the modules from a jar-file to a single executable file.

There is a further aspect: machine code usually occupies more storage and memory space (in terms of bits and bytes) than byte code. In other words, compiling creates executables that may be larger than their original byte code. For some use cases that may not be desired (e.g., in case of embedded computers with restricted resources).

The skilled person can equip the JVM (or any other runtime environment) to actually measure execution duration, and automatically determine when performance-critical occur. Measurement is not limited to execution but also applicable to translating (by compilers or interpreters).

### JIT compiler

An approach to overcome the disadvantages of static compilers (such as compiler 133) is to make them operate dynamically. In some cases, JVM 130 comprises a so-called just-in-time-computer (here JIT compiler 132). The "just-in-time" feature also relates to the execution duration in that the application computer has to execute the code of a particular module. (Note: there is also a variant of JIT called "load time compiler" which compiles a module when it is loaded.)

JIT compiler 132 is adapted to receive the trigger, i.e., that a particular module available in byte code has to be executed. The trigger can arrive from a different module (that the application computer executes). The JIT compiler then compiles the byte code to machine code, and loads the machines code to memory (cf. FIG. 1 to MCM 140). Once the byte code becomes available, it can be stored to be called again at a later point in time. The first execution (including the just-in-time compilation) may take more time than an execution through an interpreter, but subsequent executions (no compilation required) may take less time.

However, the JIT compiler may show some (or even all) of the constraints identified above. (i) The application computer executes the JIT compiler in its memory, but the share of the memory occupied by the JIT compiler is not available for system modules and for application modules. The JIT compiler would have to be executed substantially simultaneously with the module to be compiled. (ii) The application computer may execute the JIT compiler multiple times for the same byte code. Such redundant resource consumption is potentially not desired. In the robot example, battery power must not be wasted. (iii) The principle that code translation (here from byte to machine code) precedes code executing (the computer executing machine code) applies as well. The execution duration comprises the compilation time. Time-critical modules may be delayed, which needs to be avoided. As mentioned above, the robot may fall over because the JIT compiler may still be occupied with compiling. (iv) Repeating the compilation is possible, for example, to optimize the machine code by known procedures such as profiling or the like, but repeating must stop when the machine code is actually required at MCM 140. (v) The JIT compiler consumes memory (when being executed) and the memory can - at least temporarily - become large enough to disturb the execution of other modules.

To summarize this topic, using a JIT compiler may speed up the computer (by shortening the execution duration) and may add dynamics, but the constraints have side effects that are difficult to neglect.

Generally, the resulting machine code goes to memory 120, and - as explained - to MCM 140 in particular. FIG. 1 is simplified in showing interpreter 131 forwarding machine code to MCM 140, but it is noted that JVM 130 can interact with the processor otherwise (without using machine code).

### Selecting the modules that provide machine code

As illustrated in FIG. 1 by arrows, JVM 130 can (1) select interpreter 131, (2) select JIT compiler 132, or (3) select loading machine code (111-M) to memory (i.e., to MCM 140), under the condition that compiler 133 was active before.

JVM 130 can make the selection according to criteria such as execution duration (in average; estimated, or measured duration, conveniently implemented by rules), worst case, e.g., longest duration, number of uses (modules that are interpreted according to option (1) relative frequently, but such modules can be compiled according to options (2) or (3)). The skilled person can introduce further optimizations, for example, by reusing code, by compiling different modules differently, by avoiding redundancies (to have the overall code for the application small by eliminating common subexpressions), etc.

Modules 131 or 132 can be implemented in different versions. The versions can be optimized for different goals such as minimized execution duration, minimized resource consumption and the like. It is also possible to run compiler 132/133 multiple times for the same byte code so that the machine code is optimized more thoroughly in each subsequent repetition.

### Enhanced code provision option selection

There are two different but compatible (and mutually enhancing) approaches to provide the machine code more efficiently.

The first approach is to have different selections for different modules, even if the modules belong to the same application. Simplified, the machine code of different modules (of an application) could arrive at the memory (i.e., at MCM 140) in different options (1), (2), (3) or (4). The selection of the option can follow optimization criteria. The intermediate code of the application (with multiple modules) does not have to be translated by the same tool, the modules can be translated by the tools that are most appropriate, on a case-by-case basis.

The second approach is to shift some code compiling tasks to auxiliary computer 200, and to use option (4).

Both approaches can be combined with each other, and the description uses the attributes "first approach" and "second approach" only to structure the illustration.

### First approach: Different selections for different modules

As mentioned above, application software for a particular application, e.g., the move application, or the charge application in the robot example, can be deployed in single files (instead of multiple files). In Java, the collection of byte code modules for an application can be deployed in jar-files. For example, there would be the files "move.jar" and "charge.jar".

JVM 130 can preselect machine code provision options (1), (2) or (3) for the jar-files separately. For example, for time-critical modules (short execution duration), JVM 130 would select machine code provision option (3). For resource intensive, but uncritical modules, JVM 130 would preselect options (1) or (2). JVM 130 can keep a reference to the preselected version in a method descriptor. The descriptor indicates whether the next call should use byte code or machine code, so that some modules are interpreted according to option (1), some are compiled just-in-time in option (2) or taken from a collection of precompiled machine code (library, optionally shared for different applications). In that sense, the collection becomes a linked library.

It is noted that the preselection of options does not have to be static. JVM 130 may change the selection, for example, when machine code becomes available over time (and when there is sufficient storage and memory for such code).

### Second approach: shifting compilation

Shortly returning to the FIG. 1, computer 200 uses compiler 233 to compile code, and computer 100 obtains precompiled machine code in a Software as a Service (SaaS) scenario. As machine code has to be provided for a particular environment (the dependence mentioned above), compiler 233 considers details for computer 100. The description introduces that approach in the following.

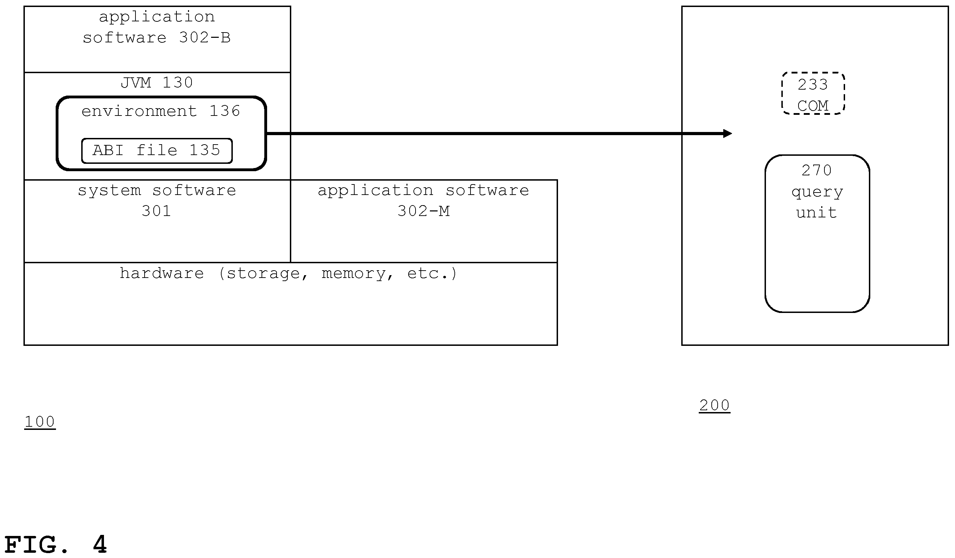

FIG. 4 again illustrates block diagrams of computers 100 and 200, with more detail. The so-called "runtime environment" (for example, JVM 130, with its modules such as interpreter, compiler, JIT compiler etc.) acts as an abstraction layer between system software 301 and application software 302-B (in intermediate code, such as byte code). Application software 302-M corresponds to the one or more modules in machine code to be executed by the hardware (no abstraction required).

Application computer 100 can represent properties of its system software and its hardware by environment data. The figure symbolizes environment data 136 in a data-structure that can be accessible to JVM 130 (as illustrated). Environment data 136 can be stored with JVM 130 or otherwise. Environment data 136 needs (at least partially) to be communicated to auxiliary computer 200.

Typical examples of environment data 136 comprise: (i) the specification of system software 301, such as operating system OS, e.g., WINDOWS or LINUX, the version number of the OS, version information in other form etc., (ii) the specification of memory sizes, e.g., the amount of bytes in memory 120, (iii) the processor architecture, e.g., the Intel x86 or ARM 7, the communication protocol, e.g., type of protocol, IP addresses, etc., (iv) the specification of the application binary interface (ABI) by that JVA 130 interacts with the system software 301 (of computer 100) and interacts with the hardware of computer 100, in the figure symbolized by file 135, (v) the specification how the runtime environment (such as JVM 130) links precompiled machine code from dynamically shared libraries (for example to differentiate between Dynamic Link Library DLL and shared object SO).

As a consequence, the resulting machine code may be different for equal byte code. A more detailed introduction into that topic is given in US 6,110,226 in FIG. 3. However, the runtime environment of the prior art is not the same as JVM 130. JVM 130 further comprises requester 134. The description returns to FIG. 1 in that requester 134 is illustrated by bold lines.

The skilled person can read out environment data without the need of further explanations herein, for example, by accessing functions of the operating system, e.g., command line in WINDOWS: ipconfig, hostname, ver, etc.

In a further example, the skilled person identifies the ABI in ABI file 135 that is accessible to JVM 130. For convenience, the figure illustrates this file as part of JVM 130 but it can be provided otherwise. A fictitious code example "A+B=C" calls for adding integer variables, in machine code the instructions to a particular first processor might be PROCESSOR_TYPE_1 = "Reg1=A, Reg2=B, ADD 1,2, 3, Reg3=C" using three registers with particular processor registers to write and read variables. A particular second processor might use two different registers PROCESSOR_TYPE_2 = "Reg1=A, Reg3=B, ADD 1,2, Reg1=C" and overwrite its arguments. The machine code is given here in fictitious pseudocode, just to illustrate that the instructions will be different. File 135 comprises the identification of the conventions. Computer 200 (or compiler 233) reading the identification can provide the appropriate machine code, for the first processor type, or for the second processor type, as the case may be.

The examples are much simplified, and the skilled person lets compiler 233 take further data into account, such as operating systems identification, the API version, type and number of processors, availability of processor registers, and so on.

### Communicating environment data to the auxiliary computer

Application computer 100 can communicate environment data 136 to auxiliary computer 200 at any time. The following description assumes that the auxiliary computer has received environment data of the application computer in advance.

### Using environment data by the auxiliary computer

FIG. 4 illustrates that computer 200 uses environment data 136 by compiler 233 (when byte code has to be compiled for particular computers having a particular environment) and by query module 270 (when precompiled machine code has to be selected for a particular environment).

When the trigger (to execute a particular module) arrives, application computer 100 transmits a request-for-machine-code 351 to auxiliary computer 351. The request comprises the identification of the byte code for that the machine code is requested (the auxiliary computer may have access to the byte code, otherwise the application computer forwards the byte code), optionally, the identification of environment data 136 (if not yet transmitted earlier, cf. FIG. 4), and, optionally, any optimization criteria (such as execution speed, memory consumption of the machine code etc.)

When auxiliary computer 200 receives request 351, it returns the machine code (of the same module) to the application computer. FIG. 1 illustrates this step by reference 352. This "returning response" step can have substeps such as the following: Selecting machine code from a repository of machine code modules, e.g., as a shared library in files with .so or .dll extensions, according to identification, environment data, and optimization criteria, or otherwise performing the compilation, illustrated by query module 270 in interaction with storage 210.

In other words, auxiliary computer 200 selects the most suitable machine code (or alternatively compiles it). It is noted that the auxiliary computer may have more computation resources (more memory, higher CPU clock etc.) so that compiling may be fast enough.

Auxiliary computer 200 may use compiler 233 to compile intermediate code (such as byte code), for different environments, i.e., even for different computers 100. For example, compiler 233 may compile the AC application for air-conditioning systems running on WINDOW or LINUX. In both cases, the machine code has the same function (to control the AC device), but the machine code is specific to the operating systems.

The dotted line from query module 270 to JVM 130 illustrates response 352' indicating that a machine code is not available. In such situations, JVM 130 may select from options (1), (2) and (3) only.

### Combining both approaches

The first approaches (different selections) and the second approach (shifting compilation) can be combined. The illustration of FIG. 3 shows that applying option (4) can shorten T_EXECUTE most. Computer 100 can select the most appropriate option on a case-by-case base taking parameter into accounts such as: T_EXECUTE that should not be exceeded, the availability of precompiled machine code (in computer 200), the availability of "on-board" modules, and others.

The description continues by describing who the JVM can be used to make this selection.

### Enhanced JVM

Functionality to handle environment data 136 and to handle code translations can be implemented in JVM 130.

As already explained, JVM 130 receives the trigger to execute a particular module, obtains the machine code (that corresponds to the module), and loads the machine code into memory. The processor then executes the machine code. In an enhanced implementation, JVM 130 has more opportunities (i.e., options) to obtain the machine code by selecting, either option (1) to operate an interpreter (cf. interpreter 131), option (2) to operate a JIT compiler (cf. compiler 132), option (3) to access precompiled machine code from a collection of modules in machine code (cf. compiler 133), option (4) to send request 351 for machine code to auxiliary computer 200 (and to receive the byte code in response 352).

The enhanced JVM also take advantages of the first approach (to have different selections for different modules). In other words, the enhanced JVM can combine the first and the second approach, for example, to have different selections of machine code (i.e., code just-in-time compiled by JIT 132, compiled by compiler 133 ahead of time, or compiled by compiler 233).

### Testing

Although code translation follows predefined rules, there is no guarantee that code in the new language keeps its function. In other words, the translation from intermediate (byte) code to machine code may fail when executed by computer 100.

Optionally, auxiliary computer 200 can comprise a test environment (e.g., a sandbox, a virtual environment, a simulation environment, an environment that emulates computer 100 and - optionally - emulates equipment 101 by computer 200, etc.).

There is usually no real-time requirement for testing. Machine code 211-M in the repository (cf. storage 210) can therefore be tested independently from the operation of application computer 100. The skilled person can simulate the application of computer 100 by computer 200, at least partially.

Optionally, testing can be implemented at computer 100. As computer 100 has fewer resources than computer 200, testing can be reduced to easy-to-implement verification steps. For example, JVM 130 can check if received machine code (via response 352) complies with request 351. Versioning (of environment data including ABI specifications, of machine code etc.) can be an efficient tool that keeps resource consumption at computer 100 relatively low. Versioning is also helpful in situations where different application computers use system software (and also RTE) in different versions.

### Attack risk mitigation

As mentioned above, source code 111-S and intermediate code 111-B (FIG. 1) may be of interest for attackers. To stay with the Java scenario, an attacker can analyze and modify source code (files with the extension .java) or byte code (files with the extension .class, or .jar). The attacker can even transfer knowledge between platforms with different environments. For example, the attacker may be interested in the functionality of an application based on first operating system, with the goal to implement the same or similar functionality of the application in a second operating system.

The skilled person could apply protection measures to keep the risk of unauthorized access to application computer 100. However, the measures (firewalls, access management, malware detection software, etc.) require computing resources that are limited (especially when application computer 100 is an embedded computer).

Shifting code compilation tasks (according to option (4)) to auxiliary computer 200 can be accompanied by shifting source and byte code to the auxiliary computer. There is no need to shift all of the code. In other words, instead of storing source code 111-S and/or byte code 111-B in storage 110 of computer 100, the code could be stored in auxiliary computer 200. The simplified illustration of FIG. 1 shows this for byte code 211-B.

Since auxiliary computer 200 has more resources (compared to application computer 100, at least in many use cases), the protection measures are easier to implement at auxiliary computer 200. Of course, protection measures would be applied to both computers 100/200, but the protection measures can be adapted more adequately to the risk. Storing (some) source and byte code (for critical modules) at auxiliary computer 200 (not at 100) is a measure that removes such code out range from the attacker. The attacker of computer 100 may still access machine code (e.g., code 111-M), but would need to reverse-engineer that code back to source code or back to byte code.

Measures are known in the art, and the description therefore mentions only some of them: encryption and decryption to reduce the eavesdropping risk, authenticating the code origin to reduce the risk to run malware, etc.

Using auxiliary computer 200 can be advantageous for storing encryption and decryption information (such as keys) because auxiliary computer 200 can forward such information shortly before application computer 100 needs it. For example, by applying option (4), machine code (in encrypted form) can be decrypted by computer 100 with a key that it can receive shortly before (for example, from computer 200).

### Further enhancements

Based on the description, the skilled person can introduce further enhancements. The option selection (for example, between options (1), (2), (3) and (4)) can have a predefined priority order. For example, the order can be related to environment data 136 (cf. FIG. 4, in different versions). If environment data 136 is not available (to computer 200), if computer 200 does not have precompiled machine code for a particular environment, or for other reasons, there can be a fallback approach to use options (1), (2) or (3). Application computer 100 would still be able to run the application, although with unoptimized code.

For such situations, the execution duration will be longer, but the skilled person can calculate with reasonable tolerance to this worst-case duration.

### Computer-implemented methods

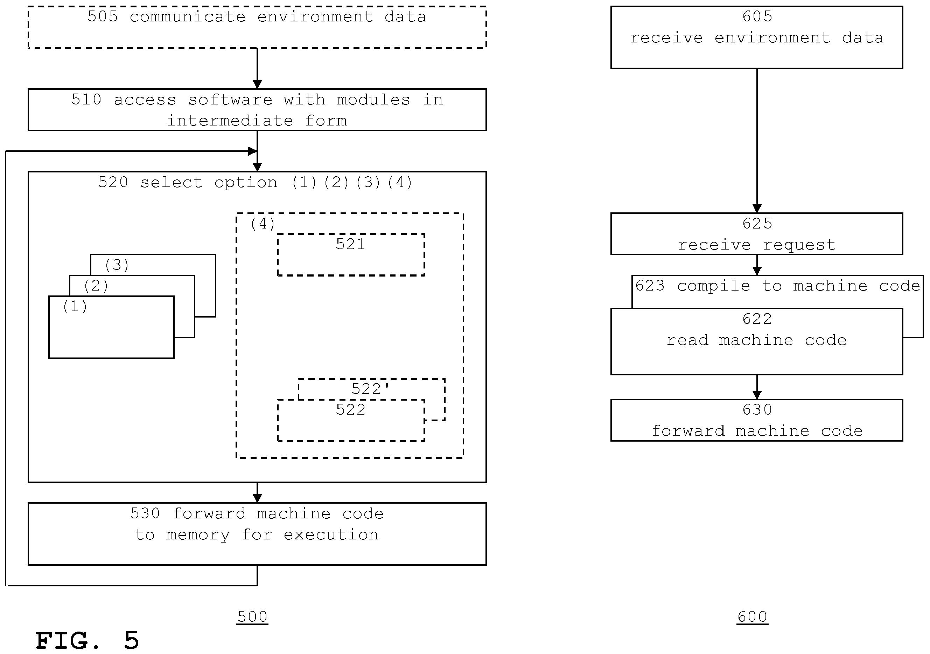

FIG. 5 illustrates flowchart diagrams of method 500 to operate application computer 100, and of method 600 to operate auxiliary computer 200.

Application computer 100 can perform method 500 independently from auxiliary computer 200 (first approach to select from (1)(2)(3)) or in interaction with computer 200 (second approach with option (4)).

The description explains the methods separately. The computer that performs the method is simply called the "computer", and the other computer that does not perform the method is called the "further computer".

### Method executed by the application computer

Computer 100 performs computer-implemented method 500 for providing machine code to memory 140/120 of computer 100. As mentioned above, computer 100 performs an application defined by application software 302-B.

In step accessing 510, computer 100 accesses storage 110 (of computer 100) to read the application software (cf. 302-B in FIG. 4) that has one or more modules (cf. 111-B in FIG. 1) in intermediate code (e.g., byte code in Java implementations).

Upon receiving a trigger to execute particular module of the application software, computer 100 selects - step 520 - an option to provide corresponding machine code (111-M in FIG. 1) to memory 140. Computer 100 either selects a first option (1) to translate intermediate code to machine code by interpreter 131 that is installed on the computer 100, a second option (2) to translate intermediate code to machine code by a just-in-time compiler 132 installed on computer 100 (i.e., the on-board compiler), or a third option (3) to load precompiled machine code (cf. 111-M) to memory 140 from storage 110.

As explained above, computer 100 selects the option according to criteria such as the expected execution duration for the particular module (comprising the time to translate the intermediate code to machine code, cf. T_EXECUTE in FIG. 3), the number of expected executions of the particular module, memory consumption by the translation, and availability of precompiled machine code.

Computer 100 then forwards (step 530) the machine code to its memory 140 for execution.

Optionally, computer 100 can interact with computer 200, but would still perform method 500. In step selecting 520, computer 100 can interact with further computer 200 and thereby can perform the following step sequence: The first step is sending 521 a request for machine code (cf. 351 in FIGS. 1-2) to further computer 200, the request specifying the intermediate code for that machine code has to be provided. The second step is performed in two alternatives: receiving (step 522) the machine code in a response (cf. 352 in FIGS. 1-2), or receiving (step 522') a response 352' (cf. FIG. 1) that machine code is not available (i.e., indicates the absence of such code). The flowchart illustrates alternative steps by overlapping boxes.

Optionally, cf. FIG. 2, computer 100 sends the request (for machine code, 351) to further computer 200 that is a computer communicatively coupled to the computer 100 by a network.

Optionally, prior to sending (step 521) the request for machine code, computer 100 communicates (step 505 illustrated at the top) environment data (discussed by reference 136 in FIG. 4) to further computer 200. As explained, environment data 136 comprises, for example, the specification of system software (301, FIG. 4) that runs on computer 100, the specification of memory sizes and processor architectures of the computer 100, the specification of communication protocols by that computer 100 operates when it executes the application, the specification of an application binary interface between the system software and the hardware of the computer (100), the specification how a runtime environment on computer 100 links machine code from dynamically shared libraries.

Optionally, the intermediate code is byte code (111-B in FIG. 1) that has been obtained from Java source code (111-S), and computer 100 executes the method steps by using a JVM 130.

### Method executed by the auxiliary computer

Computer 200 performs computer-implemented method 600 to support the provision of machine code.

In step receiving 605, computer 200 receives environment data (136 in FIG. 4) from at least one further computer (here illustrated as application computer 100, 100-R, 100-AC, 100-X) that performs an application defined by application software (302-B).

In step receiving 625, computer 200 receives a request for machine code (351 in FIG. 1) from the further computer with the identification of the byte code for that the machine code is requested. (The order of both receiving steps does not matter, but in many situations it is convenient to obtain the environment data in advance).

Computer 200 performs the next step according to request 351 and according to environment data 136 (of further computer 100). Thereby, computer alternatively reads (step 622) machine code 211-M from storage 210, or compiles (step 623) the identified byte code to machine code.

Computer 200 then forwards (step 630) the machine code to further computer 100. Method performance is completed, and computer 200 is ready to perform the request-driven steps (from step 625 to step 630) of method 600 again. In repetitions, computer 200 does not have the receive environment data 136 again, but in repetitions, computer 200 may serve different application computers 100 (cf. the illustration in FIG. 2).

Optionally, computer 200 can perform method 600 by receiving 625 the request by also receiving optimization criteria. In such implementations, computer 200 performs - alternatively - reading 622 machine code or compiling 623 according to the optimization criteria.

As explained, optimization criteria can be from selected from the following: execution speed by further computer 100, and memory consumption of the machine code in the memory 120 of further computer 100.

### Interaction aspects

The interaction between computers 100 and 200 has been described in view of methods 500 and 600, respectively. For example, computer 100 communicates environment data in step 605 to computer 200 (in step 505), and computer 200 receives environment data (from computer 100, in step 605). Receiving environment data enables computer 200 to provide machine code to computer 100 in a suitable configuration, at least in many scenarios.

The description describes the interaction with computer 100 taken the initiative to obtain machine code from computer 200 (by sending the request, in step 521). However, computer 200 can initialize the interaction as well. Computer 200 can send a request for environment data to computer 100, computer 100 can send the data (as in step 505), and computer 200 can prepare suitable machine code (by compiling by compiler 233/ FIG. 1, by obtaining the code from libraries, or the like). Without being asked (i.e., without receiving the request), computer 200 can forward machine code to computer 100 (for storing as code 111-M), and computer 100 can select option (3) to load the machine code to memory when needed (e.g., when the trigger arrives). Computer 200 can even provide the trigger for remotely controlling the application.

This third approach uses aspects of the first and second approaches, but changes the initiative: computer 200 becomes the main driver for storing machine code at computer 100.

### Discussion

The description closes by shortly referring to the technical constraints above-mentioned. Shifting compilation from the application computer to the auxiliary computer can imply to shift code translation activities from a resource-limited computer (such as the computer embedded to the robot) to a resource-rich computer (such as to the auxiliary computer). Scaling is possible.

Performing compilation in repetitions (to optimize on execution speed, resources consumption etc.) does require electrical energy, but that energy is not taken from resources such as equipment batteries or the like. Further, repeating the compilation (as mentioned, to optimize the machine code by profiling or the like) may not even be necessary, because the processor of computer 200 may operate enough faster than the processor of computer 100 to use the most complex optimization the first time around.

Overall timing may be improved and overall performance may be accelerated. Performance critical modules would be compiled ahead-of-time (by the on-board compiler 133 of the off-board compiler 233) so that the JVM would use the interpreter for uncritical modules and would dynamically load precompiled machine code. Despite the round-trip (request and response in case of the off-board compiler), the overall execution time (from receiving the trigger) may be reduced (to on-board only options).

Memory consumption of the auxiliary computer is of less concern compared to memory consumption of the application computer.

The compilers are explained for the example to convert byte code to machine code. In scenarios with further intermediate code (such as code in C), the skilled person can apply the teachings to multistage compilers.

The skilled person can apply versioning to the ABI, and to the compiled code. As mentioned, versioning ensures compatibility, between older and newer code (of system software etc.).

The initiative to provide machine code (i.e., the initiative to execute the method) can originate from either computer. In a first case, computer 100 may not have code for execution and may therefore run the method. In a second case, computer 200 may trigger computer 100 to run the method.

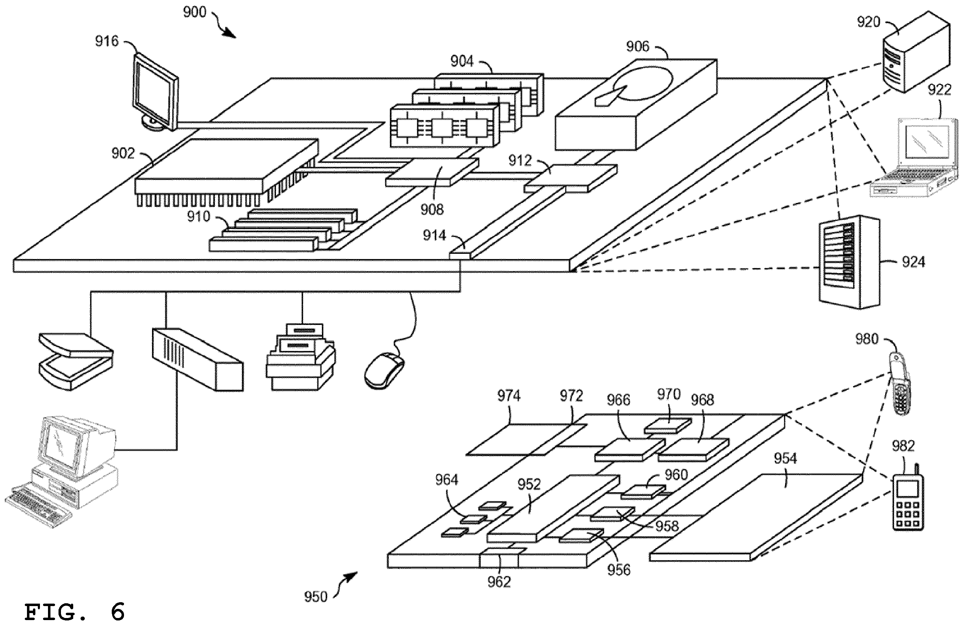

FIG. 6 illustrates a generic computer and a generic mobile computer device, which may be used with the techniques described herein. Embodiments of the invention can be implemented in digital electronic circuitry, or in computer hardware, firmware, software, or in combinations of them. The invention can be implemented as a computer program product, for example, a computer program tangibly embodied in an information carrier, for example, in a machine-readable storage device, for execution by, or to control the operation of, data processing apparatus, for example, a programmable processor, a computer, or multiple computers. A computer program as claimed can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The described methods can all be executed by corresponding computer products on the respective devices, for example, the first and second computers, the trusted computers and the communication means.

Method steps of the invention can be performed by one or more programmable processors executing a computer program to perform functions of the invention by operating on input data and generating output. Method steps can also be performed by, and apparatus of the invention can be implemented as, special purpose logic circuitry, for example, a field programmable gate array (FPGA) or an application-specific integrated circuit (ASIC).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, for example, magnetic, magneto-optical disks, optical disks or solid state disks. Such storage means may also provisioned on demand and be accessible through the Internet (e.g., Cloud Computing). Information carriers suitable for embodying computer program instructions and data include all forms of non-volatile memory, including by way of example semiconductor memory devices, for example, EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, for example, a cathode ray tube (CRT) or liquid crystal display (LCD) monitor, for displaying information to the user and an input device such as a keyboard, touchscreen or touchpad, a pointing device, for example, a mouse or a trackball, by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input.

The invention can be implemented in a computing system that includes a back-end component, for example, as a data server, or that includes a middleware component, for example, an application server, or that includes a front-end component, for example, a client computer having a graphical user interface or a Web browser through which a user can interact with an implementation of the invention, or any combination of such back-end, middleware, or front-end components. Client computers can also be mobile devices, such as smartphones, tablet PCs or any other handheld or wearable computing device. The components of the system can be interconnected by any form or medium of digital data communication, for example, a communication network. Examples of communication networks include a local area network (LAN) and a wide area network (WAN), for example, the Internet or wireless LAN or telecommunication networks.

The computing system can include clients and servers. A client and a server are generally remote from each other and typically interact through a communication network. The relationship of client and server arises by virtue of computer programs running on the respective computers and having a client-server relationship to each other.

### References

- (1), (2), (3), (4): machine code provision options
- 100: application computer
- 101: technical equipment
- 110: storage
- 111, -S, -B, -M: code
- 120: memory
- 130: JVM
- 131: interpreter
- 132: just-in-time compiler
- 133: compiler
- 134: requester
- 135: ABI file
- 136: environment data
- 140: machine code memory MCM
- 200: auxiliary computer
- 210: storage
- 220: memory
- 233: compiler
- 270: query module
- 351: request for machine code
- 352,352': response
- 5xx: method and steps performed by computer 100
- 6xx: method and steps performed by computer 200
- 9xx: generic computer and its components

## Claims

1. Computer-implemented method (500) for providing machine code to the memory (140, 120) of a computer (100) that performs an application that is defined by application software (302-B), the method (500) comprising:
accessing (510) the storage (110) of the computer (100) to read application software (302-B) having one or more modules (111-B) in intermediate code;
upon the computer (100) receiving a trigger to execute a particular module (111-B) of the application software (302), selecting (520) an option to provide corresponding machine code (111-M) to memory (140), by either selecting a first option (1) to translate intermediate code to machine code by an interpreter (131) installed on the computer (100), a second option (2) to translate intermediate code to machine code by a just-in-time compiler 132(2) installed on the computer (100), or a third option (3) to load precompiled machine code (111-M) to memory from storage (110),
wherein the computer (100) selects the option according to criteria selected from the following: expected execution duration for the particular module (111-B), comprising the time to translate the intermediate code to machine code, number of expected executions of the particular module (111-B), memory consumption by the translation, and availability of precompiled machine code (111-M); and forwarding (530) the machine code to the memory (140) for execution by the computer (100).

2. Method (500) according to claim 1, wherein in step selecting (520), the computer (100) interacts with a further computer (200) and thereby performs the following step sequence:
sending (521) a request for machine code (351) to the further computer (200), the request specifying the intermediate code for that machine code has to be provided, and
alternatively, receiving (522) the machine code in a response (352), or receiving (522') a response (352') that machine code is not available.

3. Method (500) according to claim 2, wherein the computer sends the request (351) to the further computer (200) that is communicatively coupled to the computer (100) by a network (150).

4. Method (500) according to claim 3, wherein - prior to sending (521) the request for machine code (351) - the computer (100) communicates (505) environment data (136) to the further computer (200), the environment data (136) comprising, selected from the following: the specification of system software (301) that runs on the computer (100), the specification of memory sizes and processor architectures of the computer (100), the specification of communication protocols by that the computer (100) operates when it executes the application (302-B), the specification of an application binary interface (ABI) between the system software 301 and the hardware of the computer (100), the specification how a runtime environment on the computer (100) links machine code from dynamically shared libraries.

5. Method (500) according to any of the preceding claims, wherein the intermediate code is byte code (111-B) that has been obtained from Java source code (111-S), and wherein the computer (100) executes the method (500) by using a Java Virtual Machine (130).

6. Computer (100) adapted to perform any of the method (600) according to claims 1-5.

7. Computer program product that - when loaded into a memory of a computer (100) and being executed by at least one processor of the computer causes the computer to perform the steps of the method according to any of claims 1-5.

8. Computer-implemented method (600) to support the provisioning of machine code, comprising the following steps:
by a computer (200), receiving (605) environment data (136) from at least one further computer (100, 100-R, 100-AC, 100-X) that performs an application defined by application software (302-B);
by the computer (200), receiving (625) a request for machine code (351) from the further computer (100) with the identification of the byte code for that the machine code is requested;
by the computer (200), according to the request (351) and according to the environment data (136) of the further computer (100), alternatively reading (622) machine code (211-M) from storage (210), or compiling (623) the identified byte code to machine code; and
by the computer (200), forwarding (630) the machine code to the further computer (100).

9. Method (600) according to claim 8, wherein the computer (200) performs receiving (625) the request by also receiving optimization criteria, and wherein the computer performs - alternatively - reading (622) machine code (211-M) or compiling (623) also according to the optimization criteria.

10. Method (600) according to claim 9, wherein the computer (200) receives the optimization criteria selected from the following: execution speed by the further computer (100), and memory consumption of the machine code in the memory (120) of the further computer (100).

11. Computer (200) adapted to perform any of the method (600) according to claims 8-10.

12. Computer program product that - when loaded into a memory of a computer and being executed by at least one processor of the computer causes the computer to perform the steps of the method according to any of claims 8-10.
